# FASCICULE DE BREVET EUROPEEN

(11) **EP 1 034 908 B1**
(45) Date de publication et mention de la délivrance du brevet: **07.05.2003**
(21) Numéro de dépôt: 00104053.4
(22) Date de dépôt: 28.02.2000
(51) Int. Cl.: B29C 33/48, B29D 30/06, B29C 33/00, B29C 33/30

(54) **Element moulant pour moule de bande de roulement de pneumatique**
Formwerkzeugelement für Reifenlaufflächen
Moulding element for tyre tread mould

(30) Priorité: 10.03.1999 FR 9903052
(43) Date de publication de la demande: 13.09.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Merino Lopez, José, 63200 Riom (FR); Peyron, Georges, 63200 Riom (FR); Kaczorwski, Jean-Claude, 63200 Malauzat (FR); Lavialle, Georges, 63160 Billom (FR)
(74) Mandataire: Diernaz, Christian

(56) Documents cités:
- EP-A- 0 342 908
- EP-A- 0 858 875
- EP-A- 0 873 851
- DE-A- 19 612 829
- FR-A- 2 772 663
- US-A- 1 733 064
- US-A- 5 198 244

## Description

L'invention concerne un nouveau type d'élément moulant destiné à équiper un moule pour mouler une découpure dans une bande de roulement en gomme destinée par exemple à un pneumatique.

Dans la demande de brevet française publiée sous le numéro **FR 2 759 321**, il est proposé un moule pour mouler une bande de roulement d'un pneumatique, cette bande comportant une sculpture pourvue d'incisions dont les parois principales limitant lesdites incisions sont reliées par au moins un pont de liaison de gomme de façon à conserver un niveau de rigidité satisfaisant pour ladite bande. Le moule décrit dans cette demande est formé de deux parties venant en contact l'une sur l'autre dans la position de moulage et chaque partie portant au moins un élément moulant pour mouler une incision. Dans la configuration de moulage, certains desdits éléments moulants d'une partie du moule sont en contact avec certains éléments moulants de l'autre partie de moule, leurs parois d'extrémité coopérant pour former des orifices destinés à laisser passer la gomme pendant le moulage et ainsi mouler les ponts de liaison reliant les parois de l'incision. Après moulage, l'ouverture des deux parties de moule est possible sans casser lesdits ponts de gomme. Le préambule de la revendication indépendante est basé sur le contenu de cette demande de brevet.

Si cette technique de moulage permet effectivement de réaliser des éléments de liaison entre les parois d'une découpure, elle nécessite toutefois de fabriquer la bande de roulement de façon séparée avant de l'assembler avec des moyens appropriés sur un pneumatique dépourvu de bande de roulement pour achever la fabrication dudit pneumatique. Une opération supplémentaire est alors nécessaire pour réaliser la liaison de la bande de roulement avec le pneumatique ainsi recouvert. Elle est donc coûteuse à cause du grand nombre d'opérations et nécessite une attention toute particulière dans les phases de transport et d'assemblage pour former le pneumatique.

Dans une demande européenne publiée sous le numéro EP 0 968 802, il a été proposé un élément moulant pour mouler un plot de caoutchouc dans une bande de roulement, la surface latérale dudit plot étant reliée à la bande par au moins un pont de liaison de caoutchouc. Cet élément moulant comporte des lames de moulage montées sur une tête pouvant tourner autour d'un axe sensiblement parallèle à la direction de moulage/démoulage de la pièce de moule équipé avec ledit élément moulant. Pour obtenir des ponts de liaison reliant les parois du plot de caoutchouc, il était par exemple proposé de disposer deux séries de lames sur deux cylindres concentriques, chaque lame d'un cylindre étant croisée et en contact avec des lames de l'autre cylindre de façon à délimiter, dans la configuration de moulage, des orifices permettant le moulage desdits ponts. Au cours du démoulage sous l'effet du déplacement de la pièce de moule portant cet élément moulant, le caoutchouc vulcanisé exerce des actions de contact qui obligent les cylindres portant les lames à tourner l'une par rapport à l'autre. Ce procédé, au demeurant très intéressant et performant, nécessite, dès lors que le nombre d'éléments moulants devient très grand, un effort de démoulage très important qui augmente la complexité de réalisation des équipements assurant le déplacement des pièces de moule pendant l'opération de démoulage.

Ce problème est d'ailleurs un problème général qui naît dès que le nombre d'éléments moulants devient très grand et ceci quelle que soit leur structure (ce qui est une tendance actuelle dans toutes les catégories de pneumatiques pour véhicules de tourisme ou poids lourd ...).

L'objet de l'invention est de proposer un élément moulant une découpure dans une bande de roulement permettant d'obtenir une découpure dont les parois de gomme limitant ladite découpure sont reliées entre elles par au moins un pont de gomme, ledit élément moulant ne présentant pas les inconvénients qui viennent d'être mentionnés. En particulier, un élément moulant selon l'invention permet une diminution du coût de fabrication d'une bande de roulement pourvue de découpures de ce type en réduisant le nombre d'opérations de fabrication et en permettant un démoulage sans qu'il y ait rupture des ponts de liaison tout en réduisant les efforts nécessaires pour cette opération de démoulage.

Par démoulage, on entend que, par le seul mouvement d'ouverture de la partie de moule portant l'élément moulant selon l'invention, il est possible d'extraire complètement ledit élément moulant de la bande après moulage de ladite bande.

Dans ce but, l'élément moulant selon l'invention destiné à mouler une découpure dans une bande de roulement en caoutchouc est composé d'au moins deux parties moulantes destinées à faire saillie à la surface de moulage d'un moule de moulage de ladite bande de roulement. Chaque partie moulante est pourvue de parois latérales et de parois d'extrémité limitant lesdites parois latérales. Lesdites parties moulantes sont fonctionnellement agencées entre elles pour délimiter, dans la configuration de moulage, au moins un orifice destiné au moulage d'un pont de liaison en caoutchouc entre les parois de la découpure.

L'élément moulant est caractérisé en ce qu'au moins une partie moulante est montée mobile au moins en translation dans la direction de démoulage par rapport aux autres parties moulantes dudit élément de façon à former, pendant une première phase du démoulage, au moins un passage de dimensions suffisantes pour laisser passer les ponts de liaison moulés dans la phase finale du démoulage afin de permettre le démoulage complet de l'élément moulant hors de la bande moulée sans rupture desdits ponts.

Au cours de cette phase finale du démoulage, la ou les parties moulantes de l'élément moulant, restées dans la bande, sont entraînées par le moule de moulage de la bande et vont contraindre les ponts de liaison en gomme à se déformer suffisamment pour permettre auxdites parties de sortir de la bande.

Dans une première variante, un élément moulant selon l'invention est composé d'au moins deux parties moulantes destinées à faire saillie à la surface de moulage d'un moule de moulage de ladite bande de roulement, chaque partie moulante étant pourvue de parois latérales et de parois d'extrémité joignant les parois latérales, les parois latérales étant destinées à mouler dans la bande de gomme des parois principales délimitant ladite découpure, lesdites parois principales étant reliées par au moins un pont de liaison en caoutchouc.

Dans la position de moulage, les parties moulantes de l'élément moulant sont disposées de manière à ce qu'une paroi d'une partie moulante soit en contact avec une paroi d'une autre partie moulante, les géométries des parois d'extrémité desdites parties moulantes étant fonctionnellement agencées pour délimiter au moins un orifice permettant le passage de la gomme pendant le moulage pour mouler un pont de liaison entre les parois de la découpure.

Cet élément moulant est caractérisé en ce que : l'une au moins des parties moulantes est montée mobile par rapport à la partie moulante avec laquelle elle délimite au moins un orifice, de sorte que, sous l'action des efforts de démoulage exercés par la gomme après vulcanisation, chaque partie moulante se déplace l'une par rapport aux autres parties moulantes pour créer au moins un passage de dimensions suffisantes pour laisser passer chaque pont de liaison moulé et permettre ainsi le démoulage de la bande de gomme en une seule opération sans rompre le/les pont(s) de gomme.

En fonction de la géométrie de la découpure souhaitée et de la géométrie de celle des ponts de caoutchouc entre les parois principales de ladite découpure (à la fois la forme des sections transversales desdits ponts et leur répartition), il est avantageux de prévoir que la partie mobile de l'élément moulant comporte une paroi d'extrémité agencée pour pouvoir se déplacer par rapport à une autre partie de l'élément moulant tout en restant en contact avec une paroi d'extrémité de ladite autre partie (ladite paroi de l'autre partie jouant le rôle de rampe de guidage du déplacement de la partie mobile pendant le démoulage). Si on note α l'angle, différent de zéro, que fait la rampe de guidage avec la direction de démoulage, plus cet angle α est grand (en restant toutefois inférieur à 45°) plus le passage formé est élargi, ce qui a pour effet de rendre plus aisé le démoulage.

Dans une autre variante, un élément moulant selon l'invention peut comporter en outre au moins une partie moulante montée mobile en rotation par rapport à au moins une autre partie moulante, par exemple dans le cas où une partie moulante comporte au moins une lame enroulée en hélice pour mouler une incision de forme hélicoïdale.

Un élément moulant selon l'invention peut être indifféremment utilisé dans un moule de moulage d'un pneumatique ou bien dans un moule pour mouler une bande de roulement destinée par exemple au rechapage d'un pneumatique.

D'autres possibilités et avantages de l'élément moulant selon l'invention seront fournis avec la description des figures suivantes dont le but est de présenter de manière non limitative des variantes de réalisation:
Les figures **1A** et **1B** montrent une première variante d'élément moulant selon l'invention comportant trois pièces assemblées dont une est montée mobile et destinée à mouler une incision plane dont les parois sont reliées par un pont de gomme de liaison;
les figures **2A** et **2B** représentent une autre variante d'élément moulant selon l'invention formé par l'assemblage de trois pièces pour mouler une incision dont les parois sont reliées par deux éléments de liaison disposés en oblique par rapport à une direction sensiblement perpendiculaire à la surface de roulement de la bande;
les figures **3A** et **3B** montrent une variante d'élément moulant pour mouler une découpure dont les parois sont reliées par quatre éléments de liaison, ledit élément comportant deux parties moulantes mobiles;
les figures **4A, 4B, 4C** montrent une variante d'un élément moulant dans lequel sont prévus des moyens obligeant deux parties moulantes mobiles à se s'écarter l'une de l'autre au début du démoulage;
les figures **5A** et **5B** montrent une autre variante d'élément moulant selon l'invention comportant une partie moulante pouvant tourner autour d'un axe de rotation.

Sur la figure **1A,** on voit un élément moulant **1** destiné à équiper un moule de moulage d'une bande de roulement pour pneumatique. Cet élément moulant **1** est destiné au moulage dans la bande de gomme d'une découpure délimitée par deux parois principales reliées par un pont de gomme. Cet élément moulant **1** est constitué d'une première partie formant le support **4** dudit élément destiné à être ancré dans le moule et de deux parties moulantes **2, 3** assemblées avec le support **4**. Le support **4** est, par exemple, formé de deux pièces planes assemblées de manière à former un espace entre lesdites pièces à l'intérieur duquel les parties moulantes **2** et **3** sont introduites pour réaliser l'assemblage de l'élément moulant **1**.

Les parties moulantes **2** et **3** ont la forme de plaques minces ayant des parois latérales planes et parallèles **21, 22** et **31, 32** respectivement, lesdites parois étant limitées par des parois d'extrémité **231, 232, 233** et **331, 332, 333** respectivement. Dans la configuration de moulage représentée à la figure **1A**, les parties moulantes **2, 3** sont en contact suivant leurs parois d'extrémité **231** et **331,** tandis que les parois d'extrémité **232, 233, 332, 333** forment le contour extérieur des parties moulantes de l'élément moulant **1.**

La partie moulante **2** est montée dans le support **4** de l'élément moulant **1** et fixée audit support avec des moyens appropriés de façon à être solidaire dudit support dans tous ses déplacements.

La partie moulante **3** est mise en place à l'intérieur du support **4** de façon à être adjacente à la partie moulante **2** tout en étant mobile par rapport audit support et à ladite partie moulante **2.** Pour permettre le mouvement de la partie moulante **3,** la paroi d'extrémité **333** comporte du côté opposé à la paroi d'extrémité **332** un épaulement **334** qui coopère avec un axe **335** traversant le support de part en part pour limiter la course de ladite partie moulante **3** à l'intérieur du support **4.**

Au cours d'un déplacement de la partie moulante **3** par rapport au support **4,** la paroi latérale **331** de la partie moulante **3** reste en appui/en contact sur la paroi latérale **231** de la partie moulante **2** ce qui assure le guidage de la partie moulante **3.**

Dans la position de moulage représentée à la figure **1A**, les parties moulantes **2** et **3** en contact selon leurs parois d'extrémité **231, 331** délimitent un orifice **5** traversant l'élément moulant **1**. Cet orifice **5** est destiné à laisser passer la gomme pendant le moulage d'une découpure dans une bande de gomme pour former un pont de liaison entre les parois de la découpure moulée par l'élément moulant.

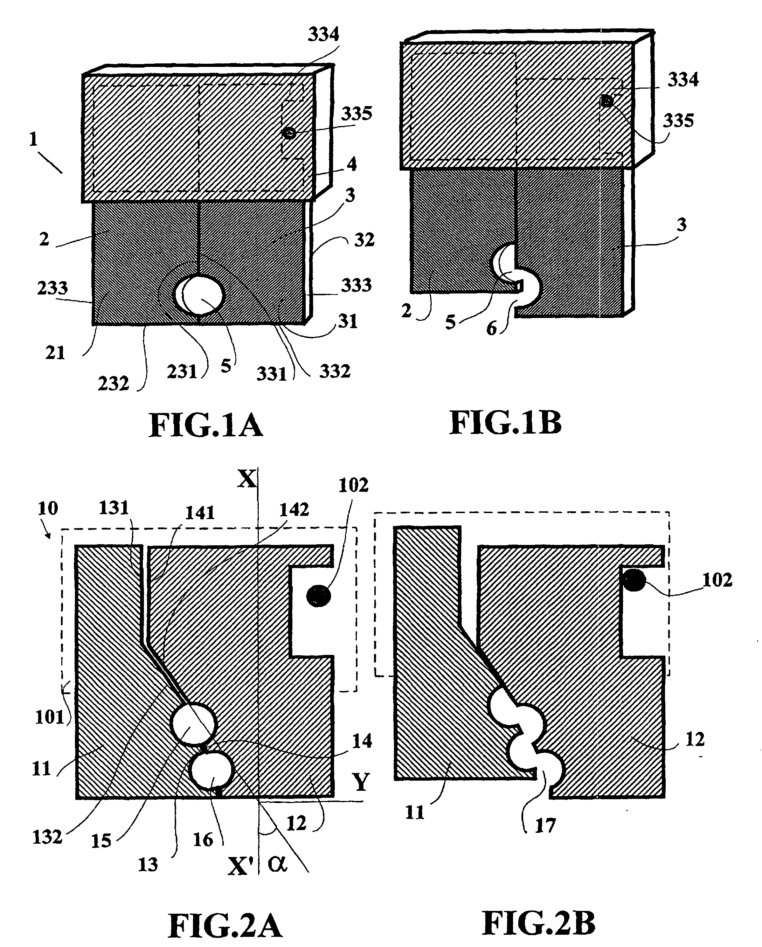

Sur la figure **1B**, le même élément est représenté dans la configuration de démoulage selon laquelle, le support **4** et la partie moulante **2** se sont déplacés par rapport à la partie moulante **3** mobile en suivant le mouvement de démoulage. Dans cette position, l'orifice **5** n'est plus entièrement limité par les parois **231** et **331** des parties moulantes **2** et **3** et il se forme un passage **6** de dimensions suffisantes pour permettre le passage du pont de liaison de gomme et ainsi le démoulage sans rupture dudit pont.

Lorsque cet élément moulant est à l'intérieur d'une bande de roulement et dans la première phase du démoulage, le pont de gomme moulé dans l'orifice **5** exerce sur les parties moulantes **2** et **3** des efforts qui tendent à s'opposer au démoulage de l'élément moulant **1**; toutefois, compte tenu du caractère élastique de la gomme vulcanisée, la partie moulante **2** se déplace avec le support de l'élément moulant par rapport à la partie moulante **3** dans la direction de démoulage de l'élément moulant **1.** Il se forme alors un passage **6** suffisant pour laisser passer le pont de gomme moulé qui subit une déformation élastique non préjudiciable à son intégrité (c'est-à-dire sans occasionner de rupture dudit pont).

Notons que pendant la phase de moulage, l'élément moulant pénètre dans de la gomme non vulcanisée et les efforts exercés par ladite gomme sur les parois d'extrémité **232** et **332** tendent à reformer l'élément moulant tel qu'il est représenté à la figure **1A**. Il est également possible de prévoir des moyens complémentaires pour rétablir l'élément moulant dans sa configuration de moulage (par exemple, des éléments de rappels élastiques incorporés à l'élément moulant et ramenant automatiquement les parties moulantes mobiles dans la configuration voulue pour le moulage ou tout autre moyen mécanique externe audit élément moulant).

En fonction de la position souhaitée des orifices, il est peut être nécessaire de prévoir que pour un déplacement donné, suivant la direction de démoulage représentée par la flèche X, les dimensions du passage **6** formé par le mouvement relatif des deux parties moulantes **2** et **3** soient les plus grandes possible; pour cela, il est avantageux que chaque partie moulante mobile puisse se déplacer à la fois dans la direction XX' et dans une direction perpendiculaire à la direction XX' et notée Y sur les figures.

Un exemple d'un élément moulant présentant cette disposition est représenté de façon schématique sur les figures **2A** et **2B**.

La figure **2A** montre, dans la configuration de moulage, un élément **10** moulant une découpure, ledit élément étant formé de deux parties moulantes planes **11, 12** prévues pour être montées dans un support **101** ici représenté en traits pointillés. Ces deux parties moulantes ont deux parois d'extrémité **13, 14** en contact et forment deux orifices **15, 16** destinés à permettre le passage de la gomme pour mouler deux ponts de liaison en gomme disposés obliquement. Chaque paroi d'extrémité **13, 14** est formée de deux parois dans le prolongement l'une de l'autre, une première paroi, respectivement, **131, 141** dont les coupes suivant le plan de la figure sont orientées dans une direction parallèle à la direction XX' correspondant à la direction de démoulage et une seconde paroi, respectivement, **132, 142** inclinée par rapport à cette même direction d'un angle α.

Dans le cas de cet élément moulant **10,** et comme cela est clairement visible sur la figure **2B**, le démoulage de cet élément occasionne, dans un premier temps, un déplacement de la partie moulante mobile **11** par rapport à la partie **12** montée mobile dans le support. Ce déplacement relatif s'effectue de telle sorte que les parois d'extrémité **13** et **14** restent en contact suivant leurs parties inclinées **132** et **142.** Par ce moyen, il se produit un déplacement de la partie mobile **12** par rapport à l'élément moulant comportant à la fois une composante de déplacement suivant XX' et une composante de déplacement suivant une direction Y située dans le plan de la figure et perpendiculaire à la direction XX'.

Cette composante de déplacement selon Y est d'autant plus importante que l'angle α est important.

Au cours du démoulage, un passage **17** est formé qui permet la sortie des deux ponts de gomme moulés. La composante de déplacement de la partie moulante **12** par rapport à la partie moulante **11** augmente très sensiblement les dimensions du passage **17** ce qui peut être favorable à un démoulage plus aisé et à une moindre sollicitation sur les ponts de gomme.

Comme cela a été mentionné pour l'élément moulant représenté sur les figures **1A** et **1B**, des moyens **102** sont prévus pour limiter la course de la partie moulante **12** à l'intérieur du support **101.**

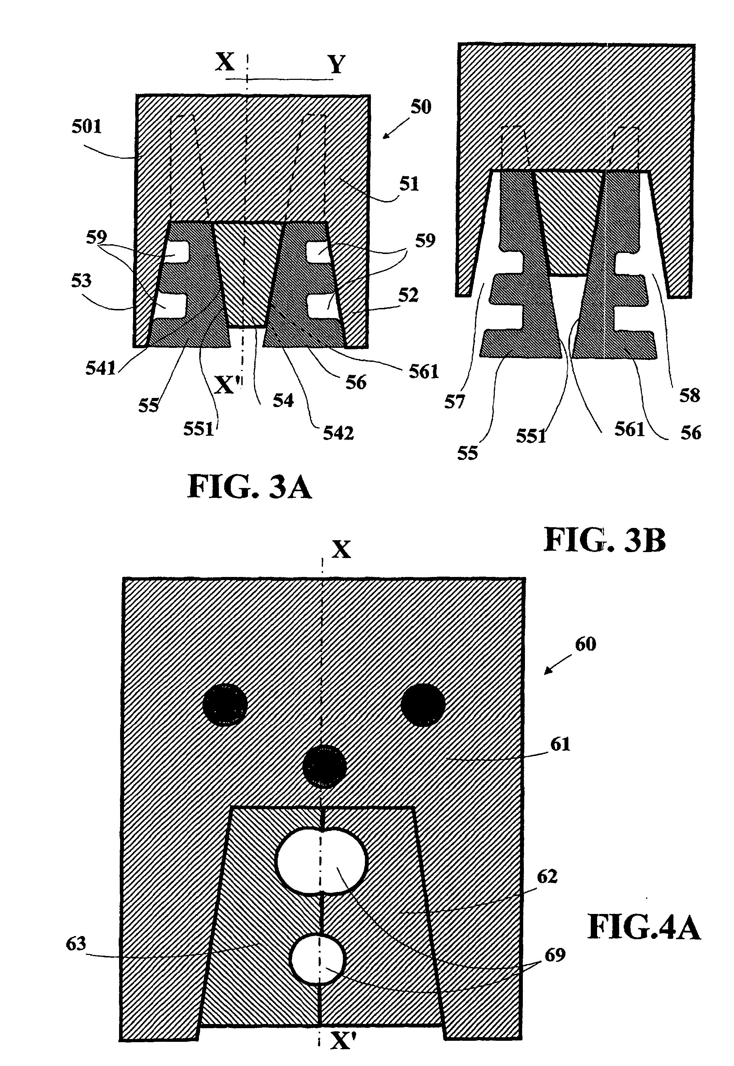

Les figures **3A** et **3B** montrent une autre variante d'un élément moulant **50** selon l'invention permettant de mouler une découpure plane délimitée par deux parois principales sensiblement parallèles, ladite découpure étant pourvue de quatre ponts de liaison reliant lesdites parois. Selon cette variante, l'élément moulant **50** comporte un support **501** dont une partie **51,** de forme sensiblement rectangulaire, est destinée à être fixée dans un moule de moulage d'une bande de roulement d'un pneumatique et est prolongée par deux extensions **52, 53** faisant saillie sur la surface de moulage dudit moule.

Le support **501** de l'élément moulant **50** comporte une rainure à l'intérieur de laquelle sont montées :
- une partie moulante intermédiaire **54** s'étendant dans la direction des extensions **52, 53;** cette pièce **54** est montée fixe par rapport audit support et est pourvue de deux parois d'extrémité **541, 542** dont les traces sur le plan de coupe sont inclinées par rapport à la direction XX' de l'élément moulant correspondant sensiblement à la direction de moulage/démoulage de la pièce de moule équipé de l'élément moulant **50;**
- deux parties moulantes **55, 56** montées mobiles par rapport à la partie intermédiaire **54** et au support **501;** ces deux parties moulantes mobiles **55, 56** comportant des parois d'extrémité **551, 561** dont les profils sont appropriés pour, dans la position de moulage, délimiter deux orifices **59** avec chaque extension **52, 53.** Par ailleurs, ces mêmes parties moulantes mobiles **55, 56** sont en contact glissant avec les parois d'extrémité **541, 542** de la pièce intermédiaire **54** dont le rôle est de servir de guide auxdites parties moulantes mobiles **55, 56** pendant le démoulage comme cela est clairement visible sur la figure **3b.**

Sur la figure **3B** montrant l'élément moulant dans une première phase du démoulage, il apparaît que l'élément moulant **50** et son support **501** avec la partie intermédiaire **54** ont suivi le mouvement de démoulage du moule et se sont déplacées dans la direction XX' (direction de démoulage) tandis que les parties moulantes **55, 56** sont restées en place compte tenu de la présence des ponts de liaison.

Au cours de cette première phase de démoulage, des orifices **57, 58** ont été formés pour mouler des ponts de liaison en gomme. Après moulage et grâce à l'élasticité de déformation de la gomme vulcanisée, il est possible d'extraire les parties moulantes **55** et **56** de la gomme sans pour autant rompre lesdits ponts de gomme.

Des moyens, non représentés, sont, bien entendu, prévus pour limiter la course de déplacement relatif des pièces mobiles **55** et **56** par rapport au support de l'élément moulant.

D'autres modes de réalisation peuvent être également envisagés comme par exemple celui dans lequel la pièce intermédiaire **54** fait une partie du support **501** ou celui dans lequel des orifices sont prévus entre la pièce **54** et l'une au moins des parties moulantes mobiles.

Dans l'esprit de l'invention, une des parties de l'élément moulant mobile en translation par rapport à au moins une autre partie peut être intégrée directement dans une pièce de moule et être, par exemple, réalisée sous la forme d'une nervure solidaire du moule.

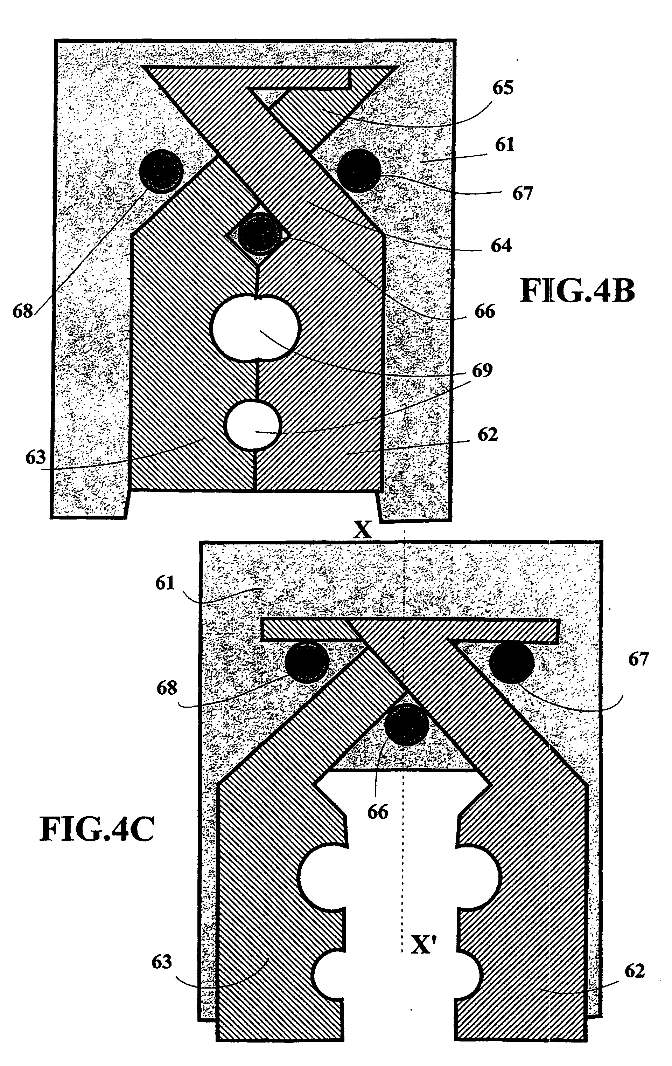

Les figures **4A, 4B, 4C** représentent une autre variante d'un élément moulant **60** selon l'invention dans lequel des moyens sont en outre prévus dans ledit élément moulant pour obliger chaque partie moulante mobile dudit élément à s'écarter suffisamment de la partie moulante avec laquelle elle délimite au moins un orifice pour former un passage rendant possible le démoulage.

Sur la figure **4A**, un élément moulant **60** est représenté dans la configuration de moulage; cet élément est composé de deux parties moulantes planes **62, 63** mobiles montées dans une rainure prévue sur un support **61** dont une partie est destinée à mouler une partie d'une incision, l'une des dimensions principales dudit support définissant la direction XX' correspondant à la direction préférentielle de moulage/démoulage dudit élément lorsque celui-ci équipe un moule de moulage d'une bande de roulement pour un pneumatique.

Les parties moulantes **62, 63** en contact suivant deux de leurs parois d'extrémité délimitent deux orifices **69** pour mouler deux ponts de liaison en gomme entre les parois de l'incision moulée par l'élément moulant **60.**

La figure **4B** montre une coupe pratiquée à mi épaisseur dans le même élément moulant **60** et dans la même configuration de moulage. Sur cette figure **4**b, on observe que chaque partie moulante mobile **62, 63** comporte respectivement un prolongement **64, 65** orienté obliquement par rapport à la direction XX'. Les prolongements **64** et **65** passant respectivement entre des axes **66, 67** et **66, 68** traversant le support de part en part. Au moment du démoulage, la pièce de moule, sur laquelle est fixé l'élément moulant **60,** entraîne dans son mouvement suivant XX' le support **61** tandis que les parties moulantes **62, 63** sont, sous l'action des ponts de gomme, contraintes à rester dans la gomme de la bande de roulement. Dans cette première phase, l'axe **66** situé en position centrale exerce sur chaque prolongement **64, 65** un effort dirigé suivant la direction XX' et oblige les parties moulantes à s'écarter l'une de l'autre pour former un passage libérant les ponts de liaison moulés dans les orifices **69.** Précisons que ce mouvement d'écartement est possible grâce à la nature élastiquement déformable de la gomme moulée et vulcanisée.

La position atteinte en fin de démoulage est représentée sur la figure **4C** sur laquelle on distingue les parties moulantes **62, 63** qui en se déplaçant dans la direction XX' se sont écartés dans une direction perpendiculaire à la direction XX' sous l'action de l'axe médian **66** pour permettre le démoulage complet sans rupture des ponts de liaison. Les deux axes **67, 68** servent à la fois de guide au déplacement des prolongements **64, 65** et également de butée d'arrêt de déplacement des parties moulantes mobiles **62, 63.**

À l'inverse, les efforts exercés par la gomme au moment de la pénétration de l'élément moulant **60** dans la matière à mouler provoquent le rapprochement des parties moulantes mobiles **62, 63** jusqu'à retrouver la configuration de moulage des figures **4A** et **4B**. Pour faciliter ce rapprochement, il est possible d'adjoindre à cet élément moulant des éléments de rappel élastiques qui rentrent en action après démoulage total dudit élément moulant.

Les variantes d'éléments moulants selon l'invention qui ont été décrites peuvent bien sûr présenter des géométries non nécessairement planes, comme par exemple des géométries courbes, ondulées ou en zigzag.

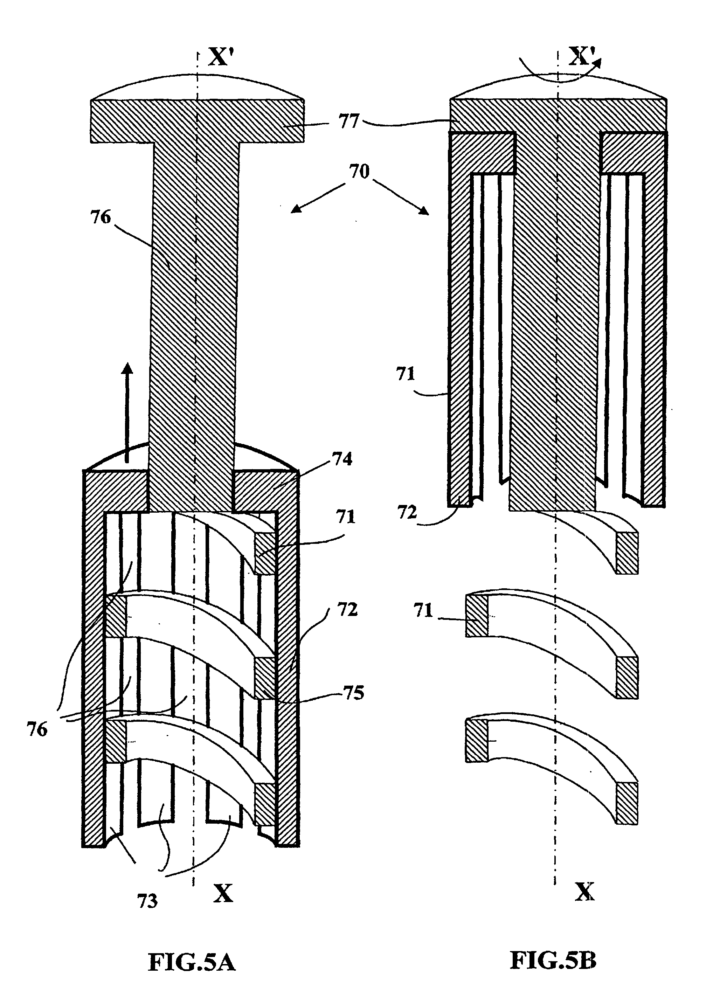

Les figures **5A** et **5B** représentent des vues perspectives d'une autre variante d'un élément moulant selon l'invention pour mouler une découpure de forme générale cylindrique d'axe XX' dans une bande de roulement, ladite découpure délimitant un plot de gomme dont la paroi latérale est pourvue de plusieurs ponts de liaison de gomme reliant ledit plot avec la bande de roulement.

Sur la figure **5A,** on voit un élément moulant **70** destiné à équiper un moule de moulage d'une bande de roulement pour pneumatique. Cet élément moulant **70,** destiné au moulage dans la bande de gomme d'un plot de gomme de géométrie cylindrique d'axe noté XX', comporte une première partie moulante **71** et une deuxième partie moulante **72.** La deuxième partie moulante **72** est formée d'une pluralité de lames **73** s'étendant sensiblement parallèlement à la direction de l'axe XX'; ces lames **73** sont portées par un support **74**. La première partie moulante **71** comporte une lame **75** enroulée en hélice autour de l'axe XX', ladite lame **75** étant portée par un support cylindrique **76** monté traversant le support **74** de la deuxième partie moulante **72.**

Conformément à l'invention, la deuxième partie moulante **72** est montée mobile en translation suivant la direction XX' par rapport à la première partie moulante **71** de manière à faciliter (c'est-à-dire à diminuer l'effort de démoulage) l'extraction desdites parties moulantes hors d'une bande de caoutchouc moulée.

Dans la configuration de moulage représentée sur la figure **5A**, les lames **73** sont en contact tangentiellement avec la lame **75** de manière à délimiter une pluralité d'orifices **76** pour laisser passer la gomme pendant le moulage d'une bande de roulement. La mise en contact desdites lames **73** et **75** permet de mouler une incision délimitant un plot de gomme de forme quasiment cylindrique.

Dans une première étape du démoulage, la deuxième partie moulante **72** est entraînée dans la direction de démoulage et se déplace parallèlement à XX' par rapport à la première partie moulante **71** jusqu'à venir en butée contre un épaulement prévu sur ladite partie moulante **71.** Suite à ce déplacement, il se forme un passage en hélice autour de XX' pour laisser passer les ponts de liaison moulés dans les orifices **76** au cours de l'étape suivante pendant laquelle la première partie moulante **71** comportant une lame en hélice et montée libre en rotation par rapport à la deuxième partie moulante **72** est entraînée à la fois en translation et en rotation pour être extraite de la bande moulée.

Dans l'élément moulant qui vient d'être décrit, le démoulage comprend dans une première étape un mouvement de la première partie moulante par rapport à la deuxième partie moulante suivi d'une deuxième étape au cours de laquelle ladite deuxième partie est extraite de la bande moulée; on peut également envisager que les mouvements des deux parties moulantes se produisent simultanément.

Une autre variante de l'élément moulant présenté aux figures **5A** et **5B** consiste à remplacer les lames droites de la deuxième partie moulante par des lames enroulées également en hélice autour de XX' mais dans un sens de rotation opposé à celui de/des lame(s) de la première partie moulante. Dans cette variante, la première étape du démoulage va s'accompagner à la fois d'un mouvement de rotation d'une des parties moulantes et d'une translation par rapport à l'autre partie moulante. Cette structure d'élément moulant permet une réduction très sensible des efforts à appliquer sur chaque élément moulant pour réaliser le démoulage.

De manière générale, les éléments moulants selon l'invention peuvent être avantageusement associés à des moyens mécaniques pour entraîner les parties moulantes mobiles dans leur mouvement avant ou pendant la première étape du démoulage.

## Revendications

1. Élément moulant (**1, 10, 50, 60, 70**) pour équiper une pièce d'un moule de moulage d'une bande de roulement en mélange de caoutchouc pour pneumatique, ladite pièce de moule pouvant être déplacée dans une direction de moulage/démoulage XX', ledit élément moulant destiné à mouler une découpure dans la bande étant pourvu d'au moins deux parties moulantes (**2, 3, 11, 12, 52, 53, 54, 55, 56, 62, 63, 71, 72**) destinées à faire saillie à la surface de moulage dudit moule, chaque partie moulante étant pourvue de parois latérales et de parois d'extrémité limitant les parois latérales, lesdites parties moulantes étant fonctionnellement agencées entre elles pour délimiter, dans la configuration de moulage, au moins un orifice (**5, 15, 16, 59, 69, 76**) destiné au moulage d'un pont de liaison en caoutchouc entre les parois de la découpure, l'élément moulant étant **caractérisé en ce qu'**au moins une partie moulante dudit élément moulant est montée mobile au moins en translation dans la direction de démoulage XX' par rapport aux autres parties moulantes de façon à former, pendant le démoulage, au moins un passage (**6, 17, 57, 58**) de dimensions suffisantes pour permettre le démoulage complet de l'élément moulant hors de la bande moulée et vulcanisée sans rupture des ponts de liaison.

2. Élément moulant (**1, 10, 50, 60, 70**) selon la revendication **1 caractérisé en ce que** dans la position de moulage, les parties moulantes de l'élément moulant sont disposées de manière à ce qu'une des parois d'une partie moulante, ladite partie moulante étant montée mobile par rapport à la partie moulante avec laquelle elle délimite au moins un orifice, soit en contact avec une des parois de l'autre partie moulante, les géométries desdites parois en contact étant fonctionnellement agencées pour former au moins un orifice traversant l'élément moulant pour mouler un pont de liaison en gomme, de sorte que, sous l'action des efforts de démoulage, lesdites parties moulantes se déplacent l'une par rapport à l'autre pour créer un passage de dimensions suffisantes pour permettre le démoulage de la bande de gomme sans rupture desdits ponts de liaison.

3. Élément moulant (**1, 10, 50, 60**) selon la revendication **2 caractérisé en ce que** les parois d'extrémité (**231, 331, 131, 132, 141, 142, 541, 542, 551, 561**) des parties moulantes dudit élément moulant sont en contact et **en ce que** lesdites parties moulantes sont montées mobiles l'une par rapport à l'autre par glissement desdites parois d'extrémité l'une sur l'autre.

4. Élément moulant (**10, 50, 60**) selon la revendication **2** ou **3 caractérisé en ce que** l'une au moins des parties moulantes mobiles (**12, 55, 56, 62, 63**) à un mouvement ayant à la fois une composante parallèle à la direction de démoulage XX' et une composante perpendiculaire à cette direction de démoulage.

5. Élément moulant (**10**) selon la revendication **4 caractérisé en ce qu'**une portion de la paroi d'extrémité d'une partie moulante mobile en contact avec une paroi d'extrémité d'une autre partie moulante avec laquelle elle délimite au moins un orifice (**15, 16**) est formée d'une partie inclinée d'un angle α différent de zéro avec la direction de démoulage, ladite partie inclinée jouant le rôle de rampe de guidage du déplacement de ladite partie moulante mobile pendant le démoulage.

6. Élément moulant (**60**) selon la revendication **2 caractérisé en ce qu'**il comprend des moyens (**66**) pour contraindre au moins une partie moulante (**62, 63**) mobile à s'écarter, dans une direction perpendiculaire à la direction de démoulage XX', de la partie moulante avec laquelle elle délimite au moins un orifice, pour former un passage de dimensions suffisantes rendant possible le démoulage sans rupture des ponts de gomme.

7. Élément moulant (**70**) selon la revendication **1** permettant le moulage d'une découpure de forme générale cylindrique d'axe XX' **caractérisé en ce qu'**il comprend:
• une première partie moulante (**71**) formée d'une base cylindrique (**76**) portant au moins une lame (**75**) s'enroulant autour de XX' sous la forme d'une hélice de même axe, ladite partie moulante (**71**) étant capable de tourner autour de XX' en particulier sous l'action des efforts exercés par la gomme pendant le démoulage,
• une deuxième partie moulante (**72**) comportant une base cylindrique (**74**) prolongée par au moins une lame (**73**) agencée pour former avec la/les lames (**75**) de la première partie moulante (**71**) au moins un orifice (**76**) pour mouler un pont de liaison en gomme, ladite deuxième partie moulante (**72**) étant mobile dans la direction parallèle à la direction XX' par rapport à la première partie moulante (**71**) pour permettre dans la première phase de démoulage la formation d'au moins un passage de dimensions suffisantes pour rendre possible le démoulage de la deuxième partie moulante (**72**) par rotation autour de XX' de celle-ci combinée à un mouvement de translation suivant XX'.

8. Élément moulant selon la revendication **7 caractérisé en ce que** la deuxième partie moulante (**72**) porte au moins une lame ayant la forme d'une hélice autour de XX', ladite lame étant enroulée dans le sens opposé au sens d'enroulement de chaque lame (**75**) en hélice portée par la première partie moulante (**71**) et **en ce que** ladite deuxième partie (**72**) peut se déplacer dans la direction XX' par rapport à la première partie (**71**).

9. Élément moulant selon l'une quelconque des revendications **1** à **8 caractérisé en ce qu'**il est prévu des moyens de rappel élastique agissant sur les parties mobiles dudit élément pour rétablir la forme de l'élément moulant dans la configuration de moulage.

## Patentansprüche

1. Formelement (1, 10, 50, 60, 70) zum Ausstatten eines Stücks eines Formwerkzeugs zum Abformen einer Lauffläche aus einer Gummimischung für einen Reifen, wobei das genannte Stück des Formwerkzeugs in einer Abform-/Ausformrichtung XX' versetzt werden kann, das genannte Formelement, das dazu bestimmt ist, einen Einschnitt in der Lauffläche abzuformen, mit mindestens zwei abformenden Teilen (2, 3, 11, 12, 52, 53, 54, 55, 56, 62, 63, 7,1, 72) versehen ist, die dazu bestimmt sind, an der Abformoberfläche des genannten Formwerkzeugs vorzuspringen, jedes formgebende Teil mit seitlichen Wänden und mit Endwänden versehen ist, die die seitlichen Wände begrenzen, die genannten, formgebenden Teile funktionell aufeinander abgestimmt sind, um in der Abformausbildung mindestens eine Öffnung (5, 15, 16, 59, 69, 76) zu begrenzen, die zum Abformen einer Verbindungsbrücke aus Gummi zwischen den Wänden des Einschnitts bestimmt ist, und das Formelement **dadurch gekennzeichnet ist, daß** mindestens ein formgebendes Teil des genannten Formelements mindestens zur Translationsbewegung in Richtung XX' des Ausformens bezüglich den anderen, formgebenden Teile derart beweglich angebracht ist, daß es während des Ausformens mindestens einen Durchlaß (6, 17, 57, 58) mit Abmessungen bildet, die ausreichen, um das völlige Ausformen des Formelements aus der abgeformten und vulkanisierten Lauffläche ohne Bruch der Verbindungsbrücken zu gestatten.

2. Formelement (1, 10, 50, 60, 70) nach Anspruch 1, **dadurch gekennzeichnet, daß** in der Formgebungslage die abformenden Teile des Formelements derart angeordnet sind, daß eine der Wände eines formgebenden Teils, wobei das genannte formgebende Teil in Bezug auf das formgebende Teil, mit dem es mindestens eine Öffnung begrenzt., beweglich ist, in Berührung mit einer der Wände des anderen formgebenden Teils steht, wobei die Geometrien der genannten, in Berührung stehenden Wände funktionell so eingerichtet sind, daß sie mindestens eine Öffnung bilden, die das Formelement durchsetzt, um eine Verbindungsbrücke aus Gummi abzuformen, und zwar derart, daß unter Wirkung der Ausformkräfte die genannten, formgebenden Teile sich zueinander versetzen, um einen Durchlaß mit Abmessungen zu erzeugen, die ausreichen, um das Ausformen der Lauffläche ohne Bruch der genannten Verbindungsbrücken zu gestatten.

3. Formelement (1, 10, 50, 60) nach Anspruch 2, **dadurch gekennzeichnet, daß** die Endwände (231, 331, 131, 132, 141, 142, 541, 542, 551, 561) der formgebenden Teile des genannten Formelements in Berührung stehen, und daß die genannten, formgebenden Teile zueinander durch gegenseitige Gleitbewegung der genannten Endwände beweglich angeordnet sind.

4. Formelement (10, 50, 60) nach Anspruch 2 oder 3, **dadurch gekennzeichnet, daß** mindestens eines der beweglichen, formgebenden Teile (12, 55, 56, 62, 63) eine Bewegung aufweist, die gleichzeitig eine Komponente parallel zur Ausformrichtung XX' und eine Komponente senkrecht zu dieser Ausformrichtung hat.

5. Formelement (10) nach Anspruch 4, **dadurch gekennzeichnet, daß** ein Abschnitt der Endwand eines beweglichen, formgebenden Teils, das in Berührung mit einer Endwand eines anderen, formgebenden Teils steht, mit dem es mindestens eine Öffnung (15, 16) begrenzt, mit einem in Winkel α, der ungleich Null ist, zur Ausformrichtung geneigten. Teil ausgebildet ist, wobei der genannte, geneigte Teil die Rolle einer Führungsrampe zur Verlagerung des genannten, beweglichen, formgebenden Teils während des Ausformens spielt.

6. Formelement (60) nach Anspruch 2, **dadurch gekennzeichnet, daß** es Mittel (66) aufweist, um mindestens ein bewegliches, formgebendes Teil (62, 63) zu zwingen, sich, in einer Richtung senkrecht zur Ausformrichtung XX', vom formgebenden Teil, mit dem es mindestens eine Öffnung begrenzt, zu entfernen, um einen Durchlaß mit ausreichenden Abmessungen zu bilden, die das Ausformen ohne Abreißen der Grummibrücken ermöglichen.

7. Formelement (70) nach Anspruch 1, das das Abformen eines Einschnitts mit insgesamt zylindrischer Form mit der Achse XX' gestattet, **dadurch gekennzeichnet, daß** es folgende Merkmale aufweist:
• ein erstes, formgebendes Teil (71), das mit einer zylindrisrhen Basis (76) ausgebildet ist, die mindestens einen Streifen (75) trägt, der sich um XX' in Form einer Wendel mit gleicher Achse herumwickelt, wobei das genannte, formgebende Teil (71) imstande ist, sich um XX' zu drehen, und zwar besonders unter Wirkung von Kräften, die während des Ausformens vom Gummi ausgeübt werden, und
• ein zweites, formgebendes Teil (72), das mit einer zylindrischen Basis (74) ausgebildet ist, die durch mindestens einen Streifen (73) verlängert ist, der dazu ausgebildet ist, um mit dem oder den Streifen (75) des ersten, formgebenden Teils (71) mindestens eine Öffnung (76) zum Abformen einer Verbindungsbrücke aus Gummi zu bilden, wobei das genannte, zweite formgebende Teil (72) in der Richtung parallel zur Richtung XX' in Bezug auf das erste, formgebende Teil (71) beweglich ist, um in der ersten Phase des Ausformvorgangs die Bildung von mindestens einem Durchlaß mit Abmessungen zu gestatten, die ausreichen, um das Ausformen des zweiten, beweglichen Teils (72) durch Drehung um XX' dessen zu ermöglichen, verbunden mit einer Translationsbewegung in XX'.

8. Formelement nach Anspruch 7, **dadurch gekennzeichnet, daß** das zweite, formgebende Teil (72) mindestens einen Streifen trägt, der die Form einer Wendel um XX' aufweist, wobei der genannte Streifen in einer Richtung aufgewickelt ist, die der wendelförmigen Wickelrichtung eines jeden Streifens (75), der vom ersten, formgebenden Teil (71) getragen ist, entgegengesetzt ist, und daß das genannte zweite Teil (72) sich in Richtung XX' bezüglich des ersten Teiles (71) versetzen kann.

9. Formelement nach irgendeinem der Ansprüche 1 bis 8, **dadurch gekennzeichnet, daß** es mit Mitteln zur elastischen Rückstellung versehen ist, die auf die beweglichen Teile des genannten Elements einwirken, um die Form des Formelements in der Abformausbildung wieder herzustellen.

## Claims

1. A moulding element (1, 10, 50, 60, 70) for equipping a part of a mould for moulding a tread of a rubber mix for a tyre, said mould part possibly being displaced in a direction of moulding/demoulding XX', said moulding element intended to mould a cutout in the tread being provided with at least two moulding parts (2, 3, 11, 12, 52, 53, 54, 55, 56, 62, 63, 71, 72) intended to project from the moulding surface of said mould, each moulding part being provided with lateral walls and end walls limiting the lateral walls, said moulding parts being functionally arranged between them to define, in the moulding configuration, at least one orifice (5, 15, 16, 59, 69, 76) intended for moulding a rubber connecting bridge between the walls of the cutout, the moulding element being **characterised in that** at least one moulding part of said moulding element is mounted to be mobile at least in translation in the direction of demoulding XX' relative to the other moulding parts so as to form, during the demoulding, at least one passage (6, 17, 57, 58) of sufficient dimensions to permit the complete demoulding of the moulding element from the moulded, vulcanised tread without breaking the connecting bridges.

2. A moulding element (1, 10, 50, 60, 70) according to Claim 1, **characterised in that** in the moulding position, the moulding parts of the moulding element are arranged such that one of the walls of a moulding part, said moulding part being mounted to be mobile relative to the moulding part with which it defines at least one orifice, is in contact with one of the walls of the other moulding part, the geometries of said walls in contact being functionally arranged to form at least one orifice passing through the moulding element for moulding a rubber connecting bridge, such that, under the action of the demoulding forces, said moulding parts are displaced relative to each other to create a passage of sufficient dimensions to permit the demoulding of the rubber tread without breaking said rubber bridges.

3. A moulding element (1, 10, 50, 60) according to Claim 2, **characterised in that** the end walls (231, 331, 131, 132, 141, 142, 541, 551, 561) of the moulding parts of said moulding element are in contact and **in that** said moulding parts are mounted to be mobile relative to each other by sliding said end walls one on the other.

4. A moulding element (10, 50, 60) according to Claim 2 or 3, **characterised in that** at least one of the mobile moulding parts (12, 55, 56, 62, 63) has a movement having both a component parallel to the direction of demoulding XX' and a component perpendicular to this direction of demoulding.

5. A moulding element (10) according to Claim 4, **characterised in that** a portion of the end wall of a mobile moulding part in contact with an end wall of another moulding part with which it defines at least one orifice (15, 16) is formed of a part inclined at an angle α other than zero relative to the direction of demoulding, said inclined part acting as a guide ramp for the displacement of said mobile moulding part during demoulding.

6. A moulding element (60) according to Claim 2, **characterised in that** it comprises means (66) for forcing at least one mobile moulding part (62, 63) to move apart, in a direction perpendicular to the direction of demoulding XX', from the moulding part with which it defines at least one orifice, to form a passage of sufficient dimensions to permit demoulding without breaking the rubber bridges.

7. A moulding element (70) according to Claim 1, permitting the moulding of a cutout of general cylindrical shape of axis XX', **characterised in that** it comprises:
- a first moulding part (71) formed of a cylindrical base (76) bearings at least one blade (75) winding around XX' in the form of a helix of the same axis, said moulding part (71) being capable of turning around XX' in particular under the action of the forces exerted by the rubber during demoulding,
- a second moulding part (72) comprising a cylindrical base (74) extended by at least one blade (73) arranged to form with the blade(s) (75) of the first moulding part (71) at least one orifice (76) for moulding a rubber connecting bridge, said second moulding part (72) being mobile in the direction parallel to the direction XX' relative to the first moulding part (71) to permit, in the first demoulding phase, the formation of at least one passage of sufficient dimensions to permit demoulding of the second moulding part (72) by rotation thereof about XX' combined with a translational movement along XX'.

8. A moulding element according to Claim 7, **characterised in that** the second moulding part (72) bears at least one blade in the form of a helix around XX', said blade being wound in the opposite direction to the direction of winding of each helical blade (75) borne by the first moulding part (71), and **in that** said second part (72) is able to move in the direction XX' relative to the first part (71).

9. A moulding element according to any one of Claims 1 to 8, **characterised in that** elastic return means acting on the mobile parts of said element are provided to reestablish the form of the moulding element in the moulding configuration.
